# EUROPEAN PATENT APPLICATION

(11) **EP 1 521 319 A2**
(43) Date of publication of application: **06.04.2005**
(21) Application number: 04021581.6
(22) Date of filing: 10.09.2004
(51) Int. Cl.: H01M 8/02, H01M 8/04

(54) **Fuel cell and control unit in a housing**

(30) Priority: 30.09.2003 JP 2003342337
(71) Applicant: Kabushiki Kaisha Toshiba, Tokyo 105-8001 (JP)
(72) Inventor: Tomioka, Kentaro, 1-chome, Minato-ku, Tokyo 105-8001 (JP); Sato, Yuusuke, 1-chome, Minato-ku, Tokyo 105-8001 (JP); Tajima, Nobuyasu, 1-chome, Minato-ku, Tokyo 105-8001 (JP)
(74) Representative: Henkel, Feiler & Hänzel

(57) **Abstract**

A generator section (7) and a control section (29) are arranged in a housing of a fuel cell. The generator section has an electromotive unit (52) which generates power based on a chemical reaction, a fuel tank (50) which contains a fuel, a fuel circulation passage through which the fuel is circulated between the electromotive unit and the fuel tank, and a radiator section (70) which cools the fuel circulation passage. The control section has a heat generating electronic component (28a) and controls the operation of the generator section. A part of the fuel circulation passage is connected thermally to the heat generating electronic component.

## Description

The present invention relates to a fuel cell usable as a power source for an electronic device or the like and an electronic device provided with the same.

Currently, secondary batteries, such as lithium ion batteries, are mainly used as power sources for electronic devices, such as portable notebook personal computers, mobile devices, etc. These modern electronic devices have increasingly higher functions and require increased power consumption and longer operating time. To meet these requirements, compact, high-output fuel cells that require no charging are expected as novel power sources. Various types of cells exist. A direct methanol fuel cell (hereinafter referred to as DMFC) that uses a methanol solution as its fuel, in particular, has advantages over one that uses hydrogen as its fuel, easier fuel handling and simpler construction. Thus, the DMFC is a power source for an electronic device that is currently drawing a lot of attention.

Normally, a DMFC has a housing that houses a generator section for actual power generation and a control circuit section that controls the operation of the generator section. The generator section is provided with a fuel tank, mixing tank, liquid pump, air pump, etc. The fuel tank contains high-concentration methanol. The methanol in the fuel tank is diluted with water in the mixing tank. The liquid pump pressure-feeds the methanol that is diluted in the mixing tank to an electromotive unit. The air pump is used to supply air to the electromotive unit. The electromotive unit has an anode and a cathode.
It generates power based on chemical reaction by feeding the diluted methanol and air to the anode and cathode sides, respectively. As this is done, the electromotive unit is heated to high temperature with reaction heat that is produced by a chemical change.

According to a fuel cell described in Jpn. Pat. Appln. KOKAI Publication No. 7-6777, for example, the control circuit section is provided with a printed circuit board in the housing and electronic components, such as semiconductor devices and a connector, mounted on the circuit board. Heat that is produced by power generation is discharged into the housing via the surface of the electromotive unit and anode and cathode passages. Air within the housing is discharged for ventilation with a fan that is attached to the inner surface of the housing.

In the fuel cell described above, the electronic components that constitute the control circuit section include semiconductor devices and the like that generate heat. If the semiconductor devices are overheated, they may undergo malfunction or failure. Possibly, the electronic components of the control circuit section may be cooled with airflows that are formed by using the cooling fan or air blower in the housing. However, air in the housing contains steam and chemical substances that are discharged from the electromotive unit. If it is positively circulated around the electronic components, therefore, metallic parts of the control circuit section may suffer corrosion or short-circuiting. Thus, it is hard to control the generator section normally, so that the reliability of the fuel cell lowers.

The present invention has been made in consideration of these circumstances, and its object is to provide a fuel cell and an electronic device, capable of preventing overheating of electronic components and improved in reliability.

A fuel cell according to an aspect of the invention is characterized by comprising: a housing; a generator section located in the housing and having an electromotive unit which generates power based on a chemical reaction, a fuel tank which contains a fuel, a fuel circulation passage through which the fuel is circulated between the electromotive unit and the fuel tank, and a radiator section which cools the fuel circulation passage; and a control section which has a heat generating electronic component, is housed in the housing, and controls the operation of the generator section. A part of the fuel circulation passage is connected thermally to the heat generating electronic component.

According to the present invention arranged in this manner, there may be provided a fuel cell with improved reliability, capable of preventing overheating of electronic components by cooling electronic components utilizing a fuel that flows through a fuel circulation passage.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view showing a fuel cell according to an embodiment of the invention;
FIG. 2 is a perspective view showing the fuel cell connected to a personal computer;
FIG. 3 is a sectional view showing the fuel cell and the personal computer;
FIG. 4 is a perspective view showing the internal construction of the fuel cell;
FIG. 5 is a plan view, partially in section, showing the fuel cell;
FIG. 6 is a view schematically showing a generator section of the fuel cell;
FIG. 7 is a view typically showing a cell structure of an electromotive unit of the fuel cell;
FIG. 8 is a view typically showing a cathode passage and a cathode cooler of the fuel cell; and
FIG. 9 is a view schematically showing an electronic device according to another embodiment of the invention.

A fuel cell according to an embodiment of the present invention will now be described in detail with reference to the accompanying drawings.

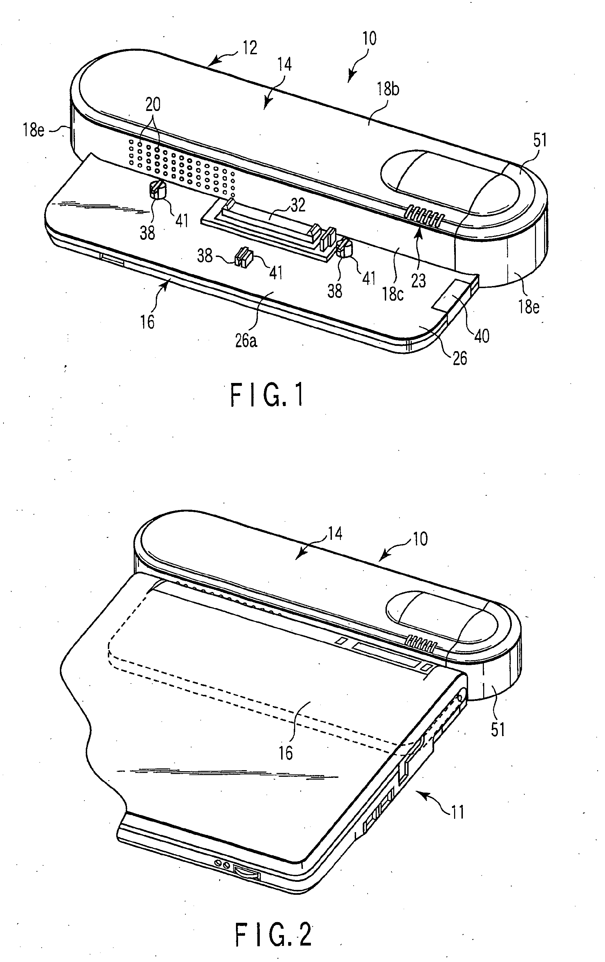

As shown in FIGS. 1 to 3, a fuel cell 10 is composed of DMFCs that use methanol as a liquid fuel. It can be used as a power source for an electronic device, such as a personal computer 11.

The fuel cell 10 is provided with a housing 12. The housing 12 has a substantially prism-shaped body 14 that extends horizontally and a bearer section 16 that extends from the body. The bearer section 16 is a flat rectangular structure that can carry a rear portion of the personal computer 11 thereon. As mentioned later, the body 14, which constitutes a first portion of the housing 12, houses a fuel tank, electromotive unit, mixing tank, etc., which constitute a generator section 7. A control section 29, a locking mechanism for locking the computer 11 on the bearer section 16, etc. are arranged in the bearer section that constitutes a second portion of the housing 12.

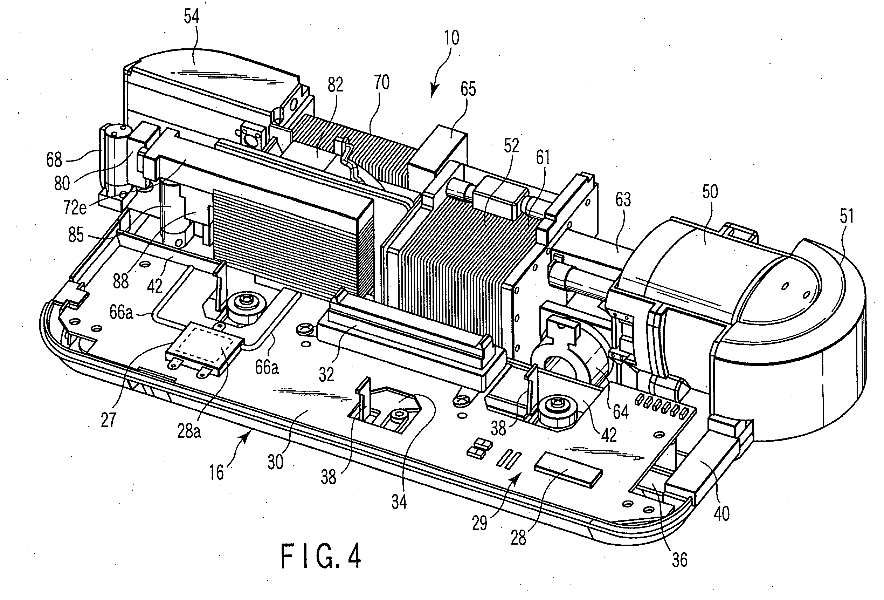

As shown in FIGS. 1 to 4, the body 14 has a flat bottom wall 18a, top wall 18b, front wall 18c, rear wall 18d, and a pair of sidewalls 18e. The bottom wall 18a is integral with a bottom wall of the bearer section 16. The top wall 18b extends substantially parallel to the bottom wall 18a. The front wall 18c is situated between the walls 18a and 18b. Each sidewall 18e has an outwardly convex curved surface. A large number of vents 20 are formed in the front wall 18c. Corresponding in position to the vents 20, a large number of vents 21 are formed in the rear wall 18d. One of the sidewalls 18e of the body 14 is formed having a large number of vents 22. Legs 24 are arranged on the outer surface of the bottom wall 18a. Indicators 23 for indicating the operating state of the fuel cell 10 are arranged on the front end portion of the top wall 18b of the body 14.

The bearer section 16 is provided with a flat top wall 26 that extends forward from the lower end portion of the front wall 18c of the body 14. The top wall 26 faces the front half of the bottom wall 18a across a gap and extends slightly declining from the body side. The top wall 26 forms a supporting surface 26a on which the personal computer 11 is placed.

The bearer section 16 houses the control section 29 for controlling the operation of the generator section 7. The control section 29 is provided with a control circuit board 30 that is located in the bearer section 16 and extends substantially parallel to the top wall 26. Electronic components, including semiconductor devices 28 and a connector 32, are mounted on the circuit board 30. The connector 32 is located adjacent to the body 14 in the center of the bearer section 16 and projects from the supporting surface 26a through the top wall 26. As mentioned later, moreover, the control section 29 is provided with a power source for driving the generator section, a driver, etc.

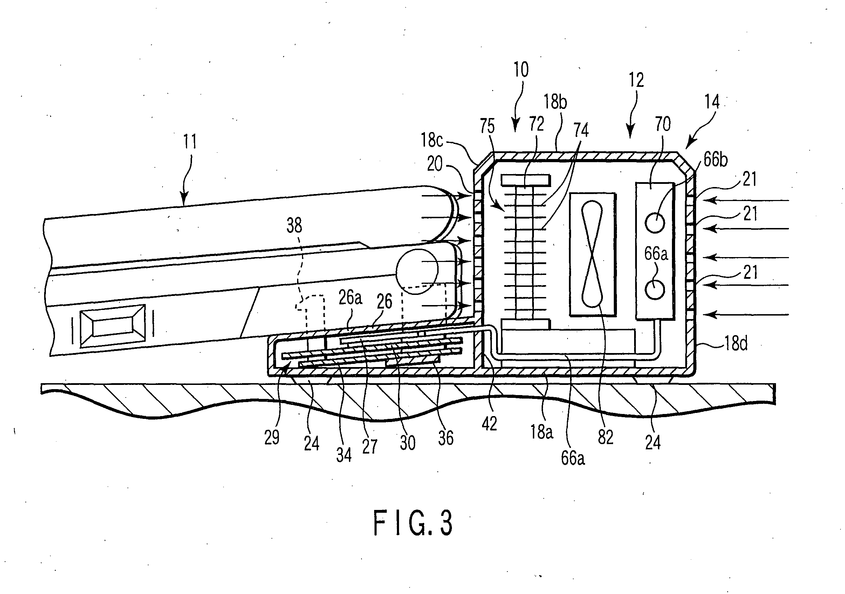

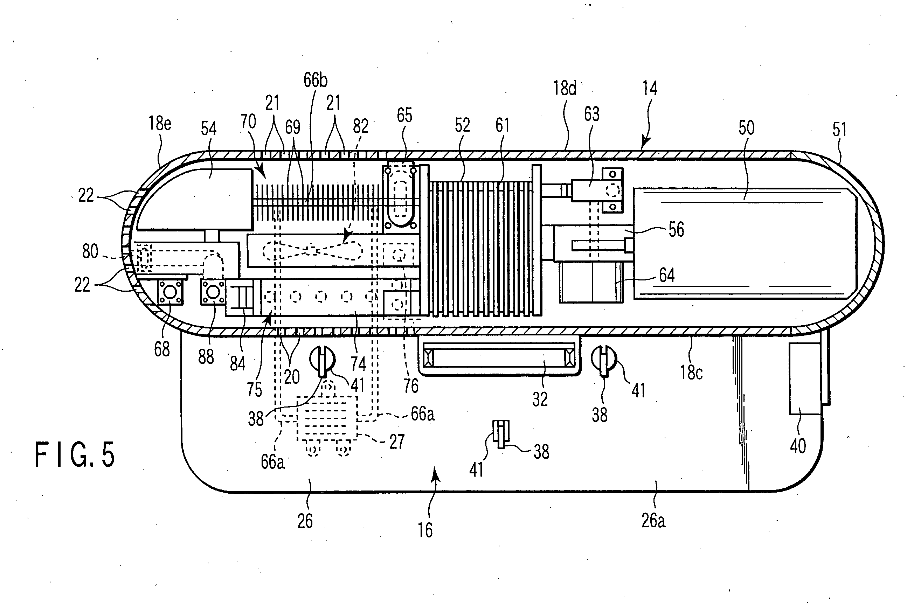

A CPU 28a, among other semiconductor devices mounted on the control circuit board 30, constitutes a microprocessor, a heat generating element that generates heat during operation. As shown in FIGS. 3 to 6, a heat-receiving head 27 that functions as a heat-receiving element is put on the CPU 28a.
The head 27 is a flat box that is formed of a highly radiative metal or the like. It is fixed to the control circuit board 30 by means of screws. The heat-receiving head 27 has a plane shape one size greater than that of the CPU 28a. The lower surface of the head 27 forms a flat heat-receiving surface. The heat-receiving surface is connected thermally to the CPU 28a through a thermally conductive grease or sheet (not shown).

A fuel passage is formed in the heat-receiving head 27. The fuel passage is divided into a plurality of sections by guide walls. The head 27 has an inlet 27a and an outlet 27b that communicate with the upstream and downstream ends, respectively, of the fuel passage. As mentioned later, the inlet 27a and the outlet 27b of the head 27 are connected with a fuel supply pipe 66a that extends from the generator section 7.

As shown in FIGS. 1, 3, 4 and 5, the bearer section 16 houses a locking plate 34 that is movable in the longitudinal direction. Three hooks 38, for example, are set up on the locking plate 34, which constitutes the locking mechanism, and project from the supporting surface 26a through the top wall 26. Located in the bearer section 16, moreover, is an eject lever 36, which moves the locking plate 34, along with the hooks 38, toward an unlocking position. An eject button 40 for actuating the eject lever 36 is provided on one side edge portion of the bearer section 16. Positioning protrusions 41 are formed adjacent to the hooks 38 on the supporting surface 26a.

The interior of the bearer section 16 that is provided with the control section 29 and that of the body 14 in which the generator section 7 is located are divided by a partition wall 42 set up on the bottom wall 18a. The partition wall 42 extends covering the overall longitudinal length of the housing 12.

As shown in FIGS. 2 and 3, the rear end portion of the personal computer 11 is placed on the supporting surface 26a of the bearer section 16 in a manner such that it is positioned by the positioning protrusions 41. The computer 11 engages the hooks 38 and is locked in a mounting position. Further, a connector (not shown) of the computer 11 is connected mechanically and electrically to the connector 32 of the bearer section 16. Thus, the fuel cell 10 and the personal computer 11 are connected mechanically and electrically to each other.

As shown in FIGS. 3 to 6, the generator section 7 comprises a fuel tank 50 on one side in the body 14, an electromotive unit 52 in the central portion of the body, and a mixing tank 54 on the other side in the body. The electromotive unit 52 generates power based on a chemical reaction. The fuel tank 50 contains high-concentration methanol as a liquid fuel. The tank 50 is formed as a cartridge that can be attached to and detached from the body 14. One side portion of the body 14 is formed as a cover 51 that can be removed when the tank 50 is attached or detached.

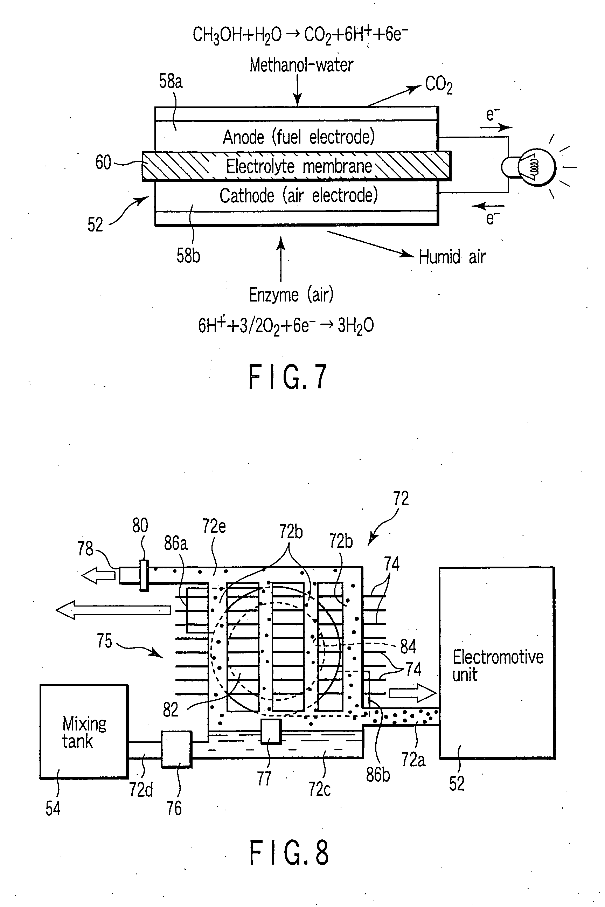

The fuel tank 50 is connected to the mixing tank 54 by means of a fuel supply line (not shown).
The fuel supply line is provided with a first liquid pump 56, which feeds the fuel from the fuel tank to the mixing tank. As shown in FIG. 7, the electromotive unit 52 is formed by laminating a plurality of cells. Each cell is formed of an anode (fuel electrode) 58a, a cathode (air electrode) 58b, and an electrolyte membrane 60 between the electrodes. A large number of cooling fins 61 are arranged around the electromotive unit 52.

As shown in FIGS. 3 to 6, the body 14 houses an air pump 64 that supplies air to the cathode 58b of the electromotive unit 52 through an air valve 63.
The air pump 64 constitutes an air supply section.
The fuel supply pipe 66a and a fuel recovery pipe 66b are connected between the electromotive unit 52 and the mixing tank 54, and extend parallel to each other. They form a fuel circulation passage through which the fuel is circulated between the anode 58a of the electromotive unit 52 and the mixing tank 54.
The fuel supply pipe 66a is connected with a second liquid pump 68 that feeds the fuel from the mixing tank 54 to the electromotive unit 52. The fuel recovery pipe 66b is provided with a gas-liquid separator 65 for separating the fuel discharged from the electromotive unit 52 from carbon dioxide produced by the chemical reaction. A large number of vertically extending radiator fins 69 are mounted around the fuel recovery pipe 66b and on a part of the fuel supply pipe 66a, and constitute a first radiator section 70. The vents 21 in the rear wall 18d of the body 14 are opposed to the first radiator section 70.

The fuel supply pipe 66a, out of the pipes that form the fuel circulation passage, for example, is pulled into the bearer section 16 through the partition wall 42 and connected to the heat-receiving head 27. More specifically, the pipe 66a extends from the mixing tank 54 into the bearer section 16 through the partition wall 42, and is connected to the inlet 27a of the head 27. Further, the pipe 66a returns from the outlet 27b of the head 27 to the interior of the body 14 through the partition wall 42, and is connected to the electromotive unit 52. Thus, the fuel circulation passage is connected thermally to the CPU 28a through the fuel supply pipe 66a and the heat-receiving head 27.

As shown in FIGS. 3 to 6 and FIG. 8, a discharge pipe 72 is connected to the electromotive unit 52 and forms a cathode passage through which products of power generation from the cathode 58b and air are discharged. The cathode passage has a first passage 72a, branch passages 72b, reservoir portion 72c, recovery passage 72d, and second passage 72e. The first passage 72a extends from the electromotive unit 52. The branch passages 72b diverge from the first passage and extend at an angle to the horizontal direction. The reservoir portion 72c communicates with the first passage and the respective lower ends of the branch passages. It stores water discharged from the first passage and water condensed in the branch passages. The recovery passage 72d guides the water stored in the reservoir portion into the mixing tank 54. The second passage 72e communicates with the respective upper ends of the branch passages. In the present embodiment, the branch passages 72b extend individually in the vertical direction.

The recovery passage 72d is provided with a recovery pump 76 that supplies the water in the reservoir portion 72c to the mixing tank 54. Located in the reservoir portion 72c, moreover, is a water level detector 77 that detects the level of the water in the reservoir portion.

A large number of horizontally extending radiator fins 74 are mounted around the discharge pipe 72 that forms the branch passages 72b, and constitute a second radiator section 75. The second radiator section 75, which includes the branch passages 72b, is opposed substantially parallel to the first radiator section 70 with a gap between them. The second passage 72e extends substantially horizontally and has an exhaust port 78, which is situated near the vents 22 of the body 14 and opens toward the vents 22. In the second passage 72e, an exhaust valve 80 is located near the exhaust port 78. Further, the second passage 72e is provided with a gas discharge pipe 81, which guides carbon dioxide separated by the gas-liquid separator 65 into the second passage 72e. The vents 20 that are formed in the front wall 18c of the body 14 are opposed to the second radiator section 75.

A cooling fan 82, a centrifugal fan, is arranged between and opposite the first and second radiator sections 70 and 75. The cooling fan 82 is located so that the rotation axis of its blades extends substantially horizontally and at right angles to the first and second radiator sections 70 and 75. The cooling fan 82 has a fan case that covers the blades. As shown in FIG. 8, the case is formed having an intake port 84 opposed to the first radiator section 70, another intake port 84 opposed to the second radiator section 75, and two exhaust ports 86a and 86b that open in a direction tangent to the rotating direction of the blades. The one exhaust port 86a opens toward the vents 22 of the body 14, and the other exhaust port 86b toward the electromotive unit 52.

Further, the generator section 7 is provided with a tank valve 87, a concentration sensor 88, and a concentration detection pump 85. The valve 87 is connected to the mixing tank 54. The sensor 88 detects the concentration of the fuel in the mixing tank 54. The pump 85 circulates the fuel in the mixing tank through the sensor.

The first and second liquid pumps 56 and 68, air pump 64, recovery pump 76, concentration detection pump 85, air valve 63, exhaust valve 80, and cooling fan 82, which are arranged in the body 14 and constitute the generator section 7, are connected electrically to the control circuit board 30 and controlled by the circuit board. The water level detector 77 and the concentration sensor 88 are connected to the control circuit board 30, and deliver their respective detection signals to the control section 29. Wires (not shown) that connect these electrical parts, sensors, and control circuit board 30 are pulled around from inside the body 14 into the bearer section 16 through a slot (not shown) in the partition wall 42.

If the fuel cell 10 constructed in this manner is used as a power source for the personal computer 11, the rear end portion of the computer is first placed on the bearer section 16 of the fuel cell, locked in position, and connected mechanically and electrically to the fuel cell through the connector 32. In this state, the power generation by the fuel cell 10 is started. Under the control of the control section 29, in this case, methanol is supplied from the fuel tank 50 to the mixing tank 54 by the first liquid pump 56 and diluted to a given concentration with water for use as a solvent that flows back from the electromotive unit 52. The methanol that is diluted in the mixing tank 54 is supplied through the fuel circulation passage defined by the fuel supply pipe 66a to the anode 58a of the electromotive unit 52 by the second liquid pump 68. On the other hand, air is supplied to the cathode 58b of the electromotive unit 52 by the air pump 64. As shown in FIG. 7, the supplied methanol and air undergo chemical reaction in the electrolyte membrane 60 between the anode 58a and the cathode 58b. Thereupon, electric power is generated between the anode 58a and the cathode 58b. The power generated in the electromotive unit 52 is supplied to the personal computer 11 through the control circuit board 30 and the connector 32.

As the power generation reaction advances, carbon dioxide and water are produced as reaction products on the sides of the anode 58a and the cathode 58b, respectively, of the electromotive unit 52. The carbon dioxide that is formed on the side of the anode 58a and the methanol are fed into the gas-liquid separator 65 and subjected to gas-liquid separation in it.
Thereafter, the carbon dioxide is delivered to the cathode passage through the gas discharge pipe 81. The methanol is returned to the mixing tank 54 through the fuel circulation passage that is defined by the fuel recovery pipe 66b. As this is done, the fuel that passes through the fuel recovery pipe 66b is cooled by the first radiator section 70, so that its temperature lowers. Thus, the temperature of the fuel that is supplied from the mixing tank 54 to the electromotive unit 52 ranges from 60 to 70°C, which is suited for the operating temperature of the fuel cell 10.

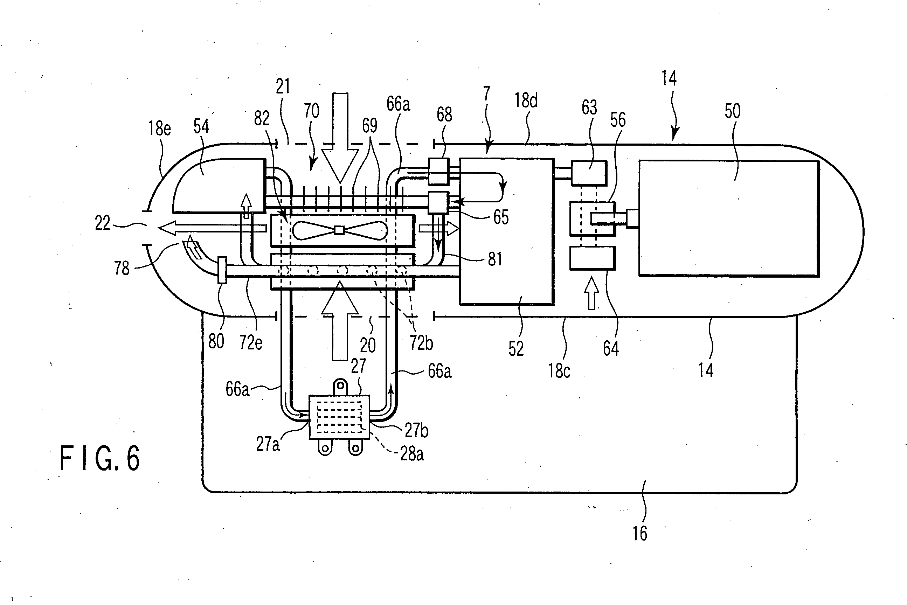

As shown in FIG. 6, the fuel is delivered to the heat-receiving head 27 through the fuel supply pipe 66a as it is supplied from the mixing tank 54 to the electromotive unit 52. After flowing through the head 27, the fuel is delivered to the electromotive unit 52 through the pipe 66a. As the fuel flows through the head 27, it deprives the CPU 28a of heat via the head 27, thereby cooling the CPU. Thus, the CPU 28a can be prevented from being overheated, so that an appropriate operating temperature can be maintained.

As shown in FIGS. 6 and 8, on the other hand, most of the water produced on the side of the cathode 58b is converted into steam, which, along with air, is discharged into the cathode passage. The discharged water and steam pass through the first passage 72a, and the water is delivered to the reservoir portion 72c.
The steam and air flow upward through the branch passages 72b to the second passage 72e. As this is done, the steam that flows through the branch passages 72b is cooled and condensed by the second radiator section 75. Water that is produced by the condensation flows downward in the branch passages 72b by gravity and is recovered in the reservoir portion 72c. The water recovered in the reservoir portion 72c is delivered to the mixing tank 54 by the recovery pump 76, mixed with the methanol, and then fed again to the electromotive unit 52.

Some of the air and steam that are fed to the second passage 72e pass through the exhaust valve 80, and are discharged into the body 14 through the exhaust port 78 and further to the outside through the vents 22 of the body. The carbon dioxide that is discharged from the side of the anode 58a of the electromotive unit 52 passes through the second passage 72e, and is discharged into the body 14 through the exhaust port 78 and further to the outside through the vents 22 of the body.

While the fuel cell 10 is operating, the cooling fan 82 is actuated, whereupon the outside air is introduced into the body 14 through the vents 20 and 21 in the body. As shown in FIGS. 6 and 8, the outside air that is introduced into the body 14 through the vents 21 and the air in the body 14 pass around the first radiator section 70 to cool it, and are then sucked into the fan case through one of the intake ports 84 for the cooling fan 82. Accordingly, the methanol that flows through the fuel circulation passage is cooled, so that heating temperature of the electromotive unit 52 is lowered. The outside air that is introduced into the body 14 through the vents 20 and the air in the body 14 pass around the second radiator section 75 to cool it, and are then sucked into the fan case through the other intake port for the fan 82. Thus, the air and reaction products that flow through the cathode passage are cooled.

The air sucked into the fan case is discharged into the body 14 through the exhaust ports 86a and 86b. The air discharged through the exhaust port 86a passes around the mixing tank 54 to cool it, and is then discharged to the outside through the vents 22 of the body 14. As this is done, the air discharged through the exhaust port 86a is mixed with the air, steam, and carbon dioxide that are discharged through the exhaust port 78 of the cathode passage. The resulting mixture is discharged to the outside of the body through the vents 22. The air discharged through the other exhaust port 86b is discharged from the body 14 after having cooled the electromotive unit 52 and its surroundings.

The concentration of the methanol in the mixing tank 54 is detected by the concentration sensor 88.
The control section 29 actuates the recovery pump 76 in accordance with the detected concentration to feed the water in the reservoir portion 72c into the tank 54, thereby keeping the methanol concentration constant. The amount of water recovery or steam condensation in the cathode passage is adjusted by controlling the cooling capacity of the second radiator section 75 in accordance with the level of the water recovered in the reservoir portion 72c. In this case, the cooling capacity of the second radiator section 75 is adjusted to regulate the water recovery amount by controlling drive voltage for the cooling fan 82 in accordance with the water level detected by the water level detector 77. The control section 29 controls the flow rate of the recovery pump 76 in accordance with the level of the water recovered in the reservoir portion 72c, thereby keeping the amount of the water in the reservoir portion 72c within the given range.

According to the fuel cell 10 constructed in this manner, the fuel that flows through the fuel circulation passage is cooled and kept at a desired temperature by the first radiator section 70 and the cooling fan 82. If the fuel circulation passage is connected thermally to a heat generating electronic component (CPU 28a in this case) of the control section 29, the CPU 28a can be efficiently cooled by utilizing the circulating fuel. Thus, the electronic component can be prevented from being overheated, so that stable operation can be maintained, and the resulting fuel cell can enjoy improved reliability.

The CPU 28a need not be cooled by utilizing airflows that are formed by the cooling fan 82 or the like. Therefore, the interior of the body 14 of the housing 12 that is provided with the generator section 7 and the interior of the bearer section 16 that is provided with the control section 29 can be divided by the partition wall 42. If humid air that contains the evaporated fuel or steam is discharged into the body, therefore, it is prevented from getting into the bearer section 16 by the wall 42. Accordingly, there is no possibility of the evaporated fuel or steam touching the control circuit board 30 or the semiconductor devices, so that the control circuit can be prevented from being corroded or shorted. Thus, the control section 29 can be restrained from undergoing malfunction or failure, so that the resulting fuel cell is highly reliable.

According to the fuel cell 10 constructed in this manner, evaporation of water is reduced by increasing exhaust temperature of the cathode by means of the first and second radiator sections 70 and 75 and the cooling fan 82. In this way, the water can be recovered efficiently and reused for the power generation reaction. Accordingly, the problem of water shortage can be solved, and the fuel of a desired concentration can be supplied to the electromotive unit 52. At the same time, the heating temperature of the electromotive unit 52 can be lowered by cooling the anode passage, so that the exhaust temperature of the cathode can be lowered more efficiently. Thus, the resulting fuel cell can perform prolonged, stable power generation.

According to the present embodiment, exhaust air from the cooling fan 82 is mixed with exhaust air from the cathode passage and discharged to the outside of the body 14. Since the exhaust air from the cathode passage contains some moisture, water drops may possibly be formed around the vents 22 of the body 14. However, the moisture can be reduced to prevent formation of water drops by mixing the air from the cathode passage with the exhaust air from the fan 82. Thus, problems that are attributable to water drops can be prevented to,ensure the high-reliability fuel cell.

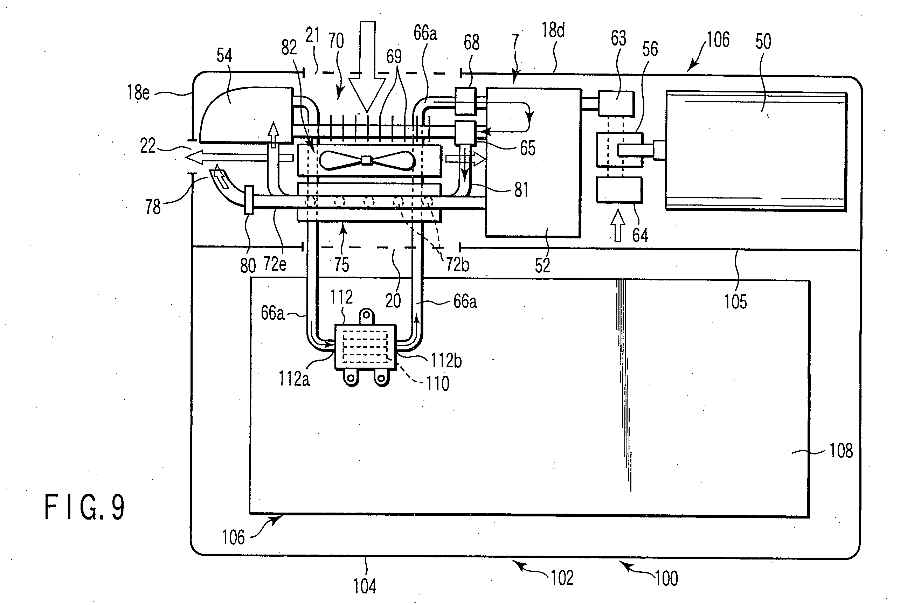

The following is a description of a personal computer with a fuel cell, as an electronic device according to a second embodiment of the invention. According to the present embodiment, the personal computer and the fuel cell are formed integrally with each other. As shown in FIG. 9, a personal computer 100 is provided with a housing 102. The housing 102 has a device body 104, a cell body 106, and a partition wall 105 that internally divides the bodies 104 and 106.

A second region that is defined by the device body 104 houses a control circuit board 108 that constitutes a control section 107 of the personal computer 100. A CPU 110 for use as a heat generating electronic component is mounted on the control circuit board.

As in the first embodiment described above, on the other hand, the cell 106 has a rear wall 18d formed with vents 21 and sidewalls 18e with vents 22. Vents 20 are formed in the partition wall 105.
The fuel cell comprises a generator section 7 located in a first region that is defined by the cell body 106. The generator section 7 is constructed in the same manner as the one according to the first embodiment.

More specifically, the generator section 7 comprises a fuel tank 50 on one side in the cell body 106, an electromotive unit 52 in the central portion of the body, and a mixing tank 54 on the other side in the body. The electromotive unit 52 generates power based on a chemical reaction. The fuel tank 50 contains high-concentration methanol as a liquid fuel. The tank 50 is formed as a cartridge that can be attached to and detached from the body 106.

The fuel tank 50 is connected to the mixing tank 54 by means of a fuel supply line (not shown). The fuel supply line is provided with a first liquid pump 56, which feeds the fuel from the fuel tank to the mixing tank. The electromotive unit 52 is formed by laminating a plurality of cells. Each cell is formed of an anode (fuel electrode), a cathode (air electrode), and an electrolyte membrane between the electrodes. A large number of cooling fins 61 are arranged around the electromotive unit 52.

The cell body 106 houses an air pump 64 that supplies air to the cathode of the electromotive unit 52 through an air valve 63. The air pump 64 constitutes an air supply section. A fuel supply pipe 66a and a fuel recovery pipe 66b are connected between the electromotive unit 52 and the mixing tank 54, and extend parallel to each other. They form a fuel circulation passage through which the fuel is circulated between the anode of the electromotive unit 52 and the mixing tank 54. The fuel supply pipe 66a is connected with a second liquid pump 68 that feeds the fuel from the mixing tank 54 to the electromotive unit 52. The fuel recovery pipe 66b is provided with a gas-liquid separator 65 for separating the fuel discharged from the electromotive unit 52 from carbon dioxide produced by the chemical reaction.
A large number of vertically extending radiator fins 69 are mounted around the fuel recovery pipe 66b and on a part of the fuel supply pipe 66a, and constitute a first radiator section 70. The vents 21 in the rear wall 18d of the cell body 106 are opposed to the first radiator section 70.

The fuel supply pipe 66a, out of the pipes that form the fuel circulation passage, for example, is pulled into the device body 104 through the partition wall 105 of the housing 102 and connected to a heat-receiving head 112. More specifically, the pipe 66a extends from the mixing tank 54 into the device body 104 through the partition wall 105, and is connected to an inlet 112a of the head 112. Further, the pipe 66a returns from an outlet 112b of the head 112 to the interior of the body 106 through the partition wall 105, and is connected to the electromotive unit 52.
Thus, the fuel circulation passage is connected thermally to the CPU 110 on the device body side through the fuel supply pipe 66a and the heat-receiving head 112.

A discharge pipe is connected to the electromotive unit 52 and forms a cathode passage through which products of power generation from the cathodes of the cells and air are discharged. The cathode passage, like the one according to the first embodiment, has a first passage, branch passages 72b, reservoir portion, recovery passage, and second passage 72e.
The recovery passage guides water stored in the reservoir portion into the mixing tank 54. The second passage 72e communicates with the respective upper ends of the branch passages. The recovery passage is provided with a recovery pump that supplies the water in the reservoir portion to the mixing tank 54.
A large number of horizontally extending radiator fins are mounted around the discharge pipe that forms the branch passages, and constitute a second radiator section 75.

The second radiator section 75 is opposed substantially parallel to the first radiator section 70 with a gap between them. The second passage 72e extends substantially horizontally and has an exhaust port 78, which is situated near the vents 22 of the cell body 106 and opens toward the vents 22. In the second passage 72e, an exhaust valve 80 is located near the exhaust port 78. The second passage 72e is provided with a gas discharge pipe 81, which guides carbon dioxide separated by the gas-liquid separator 65 into the second passage 72e. The vents 20 that are formed in the partition wall 105 are opposed to the second radiator section 75.

A cooling fan 82, a centrifugal fan, is provided between and opposite the first and second radiator sections 70 and 75. Further, the generator section 7 is provided with a tank valve, a concentration sensor, and a concentration detection pump. The tank valve is connected to the mixing tank 54. The concentration sensor detects the concentration of the fuel in the mixing tank 54. The concentration detection pump circulates the fuel in the mixing tank through the concentration sensor.

The first and second liquid pumps 56 and 68, air pump 64, recovery pump, concentration detection pump, air valve 63, exhaust valve 80, and cooling fan 82, which are arranged in the cell body 106 and constitute the generator section 7, are connected electrically to the control circuit board 108 on the device body side and controlled by the circuit board. The water level detector and the concentration sensor are connected to the control circuit board 108, and deliver their respective detection signals to the control section 107. Wires (not shown) that connect these electrical parts, sensors, and control circuit board 108 are pulled around from inside the cell body 106 into the device body 104 through a slot (not shown) in the partition wall 105.

According to the computer 100 constructed in this manner, the generator section 7, under the control of the control section 107, performs power generation in the same manner as in the first embodiment. Electric power generated in the electromotive unit 52 is supplied to a power source unit (not shown) in the device body 104.

As power generation reaction advances, carbon dioxide and water are produced as reaction products on the anode and cathode sides, respectively, of the electromotive unit 52. The carbon dioxide that is formed on the anode side and the methanol are fed into the gas-liquid separator 65 and subjected to gas-liquid separation in it. Thereafter, the carbon dioxide is delivered to the cathode passage through the gas discharge pipe 81. The methanol is returned to the mixing tank 54 through the fuel circulation passage that is defined by the fuel recovery pipe 66b. As this is done, the fuel that passes through the fuel recovery pipe 66b is cooled by the first radiator section 70, so that its temperature lowers. Thus, the temperature of the fuel that is supplied from the mixing tank 54 to the electromotive unit 52 ranges from 60 to 70°C, which is suited for the operating temperature of the fuel cell 10.

The fuel is delivered to the heat-receiving head 112 through the fuel supply pipe 66a as it is supplied from the mixing tank 54 to the electromotive unit 52. After flowing through the head 112, the fuel is delivered to the electromotive unit 52 through the pipe 66a. As the fuel flows through the head 112, it deprives the CPU 110 of heat via the head 112, thereby cooling the CPU. Thus, the CPU 110 can be prevented from being overheated, so that an appropriate operating temperature can be maintained.

The second embodiment shares the configuration and power generation operation of the generator section 7 of the fuel cell with the first embodiment. Therefore, like numerals are used to designate like portions of the two embodiments, and a detailed description of those portions is omitted.

According to the computer 100 constructed in this manner, the fuel that flows through the fuel circulation passage is cooled and kept at a desired temperature by the first radiator section 70 and the cooling fan 82. If the fuel circulation passage is connected thermally to a heat generating electronic component (CPU 110 in this case) of the control section 107 in the device body 104, the CPU 110 can be efficiently cooled or heated to the appropriate temperature by utilizing the circulating fuel. Thus, the electronic component can be prevented from being overheated, so that stable operation can be maintained, and the resulting personal computer can enjoy improved reliability.

The present invention is not limited directly to the embodiments described above, and in carrying out the invention, its components may be modified and embodied without departing from the scope or spirit of the invention. Further, various inventions may be made by suitably combining a plurality of components described in connection with the foregoing embodiments. For example, some of the components according to the above-described embodiments may be omitted. Furthermore, components of different embodiments may be combined as required.

According to the embodiments described above, the generator section comprises the fuel tank 50, electromotive unit 52, first and second radiator sections 70 and 75, and mixing tank 54 that are arranged in the order named. However, this order of arrangement may be variously changed as required. According to the foregoing embodiments, moreover, the fuel supply pipe, out of the pipes that form the fuel circulation passage, is connected thermally to the electronic component of the control section. Alternatively, however, the fuel recovery pipe may be connected thermally to the electronic component.

The fuel cell according to the present invention is not limited to the use for the personal computer described above, and may be also used as a power source for any other electronic devices, such as mobile devices, portable terminals, etc. The electronic device according to the invention is not limited to the personal computer, and the invention is also applicable to any other electronic devices. The fuel cells are not limited to the DMFCs and may be of any other types, such as PEFCs (polymer electrolyte fuel cells). The cooling fan is not limited to the centrifugal fan and may alternatively be an axial flow fan.

## Claims

1. A fuel cell **characterized by** comprising:
a housing (12);
a generator section (7) located in the housing and having an electromotive unit (52) which generates power based on a chemical reaction, a fuel tank (50) which contains a fuel, a fuel circulation passage through which the fuel is circulated between the electromotive unit and the fuel tank, and a radiator section (70, 75) which cools the fuel circulation passage; and
a control section (29) which has a heat generating electronic component (28a), is housed in the housing, and controls the operation of the generator section,
a part of the fuel circulation passage being connected thermally to the heat generating electronic component.

2. The fuel cell according to claim 1, **characterized in that** the housing (12) has a first portion which houses the generator section (7), a second portion which houses the control section (29), and a partition wall (42) which divides the first and second portions, and the fuel circulation passage extends across the partition wall between the generator section and the control section.

3. The fuel cell according to claim 1, **characterized in that** the generator section (7) comprises a mixing tank (54) in which the fuel supplied from the fuel tank (50) is mixed with water, a fuel supply pipe (66a) which is connected between the mixing tank and the electromotive unit (52), supplies the fuel from the mixing tank to the electromotive unit, and defines a part of the fuel circulation passage, and a fuel recovery pipe (66b) which is connected between the mixing tank and the electromotive unit, guides the fuel discharged from the electromotive unit into the mixing tank, and defines a part of the fuel circulation passage, the fuel supply pipe extending beside the heat generating electronic component (28a) and being connected thermally to the electronic component.

4. The fuel cell according to claim 3, **characterized by** further comprising a heat-receiving element (27) connected to the fuel supply pipe (66a) and located in contact with the heat generating electronic component (28a).

5. The fuel cell according to claim 3, **characterized in that** the radiator section (70, 75) has radiator fins (69) attached to the fuel supply pipe (66a) and the fuel recovery pipe (66b).

6. The fuel cell according to claim 1, **characterized** further comprising a cooling fan (82) which is located in the housing (12) and runs cooling air through the radiator section (70, 75).

7. An electronic device **characterized by** comprising:
a housing (102);
a fuel cell including a generator section (7) located in the housing and having an electromotive unit (52) which generates power based on a chemical reaction, a fuel tank (50) which contains a fuel, a fuel circulation passage through which the fuel is circulated between the electromotive unit and the fuel tank, and a radiator section (70, 75) which cools the fuel circulation passage; and
a device body (104) including a control section (107) which has a heat generating electronic component (110), controls the operation of the generator section, and is located in the housing,
a part of the fuel circulation passage being connected thermally to the heat generating electronic component.

8. The electronic device according to claim 7, **characterized in that** the housing (102) has a first region which houses the generator section (7), a second region which houses the control section (107) of the device body (104), and a partition wall (105) which divides the first and second regions, and the fuel circulation passage extends across the partition wall between the generator section and the control section.

9. The electronic device according to claim 7, **characterized in that** the generator section (7) comprises a mixing tank (54) in which the fuel supplied from the fuel tank (50) is mixed with water, a fuel supply pipe (66a) which is connected between the mixing tank and the electromotive unit (52), supplies the fuel from the mixing tank to the electromotive unit, and forms a part of the fuel circulation passage, and a fuel recovery pipe (66b) which is connected between the mixing tank and the electromotive unit, guides the fuel discharged from the electromotive unit into the mixing tank, and forms a part of the fuel circulation passage, the fuel supply pipe extending beside the heat generating electronic component (110) and being connected thermally to the electronic component.

10. The electronic device according to claim 9, which further comprises a heat-receiving element (112) connected to the fuel supply pipe (66a) and located in contact with the heat generating electronic component (110).
